Europäisches Patentamt

European Patent Office

Office européen des brevets

(11) Publication number: **0 250 371**
A1

## (12) EUROPEAN PATENT APPLICATION

(21) Application number: **87830158.9**

(22) Date of filing: **24.04.87**

(51) Int. Cl.⁴: **H 01 F 41/02, H 02 K 15/00**

(30) Priority: **13.06.86 IT 4006186**
**21.11.86 IT 4012786**

(43) Date of publication of application: **23.12.87**
**Bulletin 87/52**

(84) Designated Contracting States: **AT BE CH DE ES FR GB LI NL**

(71) Applicant: **TRANCERIE EMILIANE S.P.A., Strada Manara, 124, I-43100 Parma (IT)**

(72) Inventor: **Felisa, Pierino, Via Spezia, 244, I-43100 Parma (IT)**

(74) Representative: **Lanzoni, Luciano, c/o BUGNION S.p.A. Viale Trento Trieste, 25, I-41100 Modena (IT)**

(54) **Method of preparing stacks of laminations for magnetic circuits in transformers or electric motors.**

(57) The invention relates to a method of preparing stacks of laminations serving for the embodiment of magnetic circuits in transformers or rotary electric machines. According to the invention, the core laminations are punched and stacked one behind the other, facing in the same direction and in the sequence established during punching. Next, a given number of such laminations sufficient to form a core must be aligned, and then fastened together by way of a permanent connection formed at localized areas of their peripheral edges, for instance by welding (11, 12). The cage rotor of an induction motor is embodied by stacking the core laminations together and aligning them, angled if so desired, in such a way as to create channels (24) for accommodation of the conductors, then effecting the permanent connection (26) along the cylindrical outer surface of the core. The cage is cast directly into the core, following which the weldment can be removed by turning material off the same cylindrical outer surface.

0250371

## Description

The invention relates to a method of preparing stacks of laminations serving for the embodiment of magnetic circuits such as transformer cores, or rotors in electric motors of the type having a cage pressure diecast directly into the core laminations. A typical transformer core comprises members around which the coils are wound, and yokes which carry no winding, but serve to interconnect the coil-carrying members magnetically. Prior art methods of forming the laminations into a stack envisage the use of alignment and connection means consisting in pins or pivots that locate in a centre hole with which each single lamination is provided.

The difficulty in obtaining faultless positioning of a stack of laminations, that is, with the single laminations lying in exact alignment one on top of the next, becomes particularly relevant when one considers the welding operations that are ultimately required in order to attach stacked yoke laminations permanently to the butt ends of separately stacked coil-carrying members. An accurate join can in fact be ensured only when the mating surfaces of the two stacks are brought into faultless contact.

In methods of proceeding according to the prior art, the stack of laminations remains loosely assembled,

from the moment of the previous operation during which the single laminations are punched.

It happens, when the stack is assembled, that the laminations are ordered and aligned no account being taken of those edges of the laminations which carry "microburrs" left by punching.

Such microburrs occur on one side of each lamination only, and random assembly thus causes the mating surfaces of the coil-carrying members and the yokes to butt less than perfectly when joined to form a complete core.

Similarly, in prior art methods of forming a stack of core laminations for the rotor of an electric motor, use is made of a pin, insertable through a central locating hole punched in each lamination. The pin, which can be a tension pin or a plain round type, engages in an interference fit with the centre hole and serves to hold the core firmly in position during subsequent casting of the rotor cage.

Before casting takes place, the core is aligned in such a way that slots created in each lamination are lined up to form channels for accommodation of the conductors, which usually are disposed in a helical pattern, lying at a given angle in relation to the core axis.

Once the cage has been cast (pressure diecast in most instances) and solidified, the centre pin must be removed, generally with the aid of a press.

The prior art method thus described is beset by a number of drawbacks, amongst which, that of being

laborious and typified by high manufacturing costs. A further drawback of such a method is that it calls for an assortment of pins which obviously become subject to wear, amongst other considerations, and thus need to be replaced periodically.

The object of the invention is that of overcoming the aforementioned drawbacks.

The stated object is realized in a method according to the invention, which relates to the preparation of stacks of laminations serving in particular for the embodiment of magnetic circuits in transformers or electric motors, and is characterized in that it comprises the steps of:

-punching the core laminations;

-gathering up the laminations one behind the next, facing in the same direction and in the sequence established during punching;

-selecting a given number of single consecutive laminations;

-aligning the selected laminations, already gathered into stack formation;

-binding together the entire stack of laminations along one of its external or internal surfaces, by creating a permanent connection localized at the peripheral outer edges of the laminations;

The invention will now be described in detail, by way of example, with the aid of the accompanying drawings, in which:

-fig 1 shows two assembled stacks of laminations designed to be welded together in order to form a transformer core;

-fig 2 shows a detail of fig 1 in larger scale.

-fig 3 shows the laminated rotor core of an electric motor, embodied in accordance with the invention;

-fig 4 shows a single lamination of the core shown in fig 3, viewed in perspective.

With reference to the drawings, 1 and 2 respectively denote stacks of laminations which are designed to be joined together permanently so as to form the magnetic core of a transformer. More exactly, the laminations of the stack denoted 1 are shaped in such a way as to form one part of the magnetic core, comprising three coil-carrying members 3, 4 and 5 that are interconnected by yokes 6 and 7.

The stack denoted 2 is formed from laminations of rectangular shape, designed to provide yokes that will ultimately be joined, by welding, to the butt ends of the coil-carrying members 3, 4 and 5 so as to complete the magnetic circuit.

The stacks 1 and 2 are obtained by way of a method comprising the following succession of steps:

-punching the core laminations;

-gathering up the laminations one behind the next, facing in the same direction and in the sequence established during punching;

-selecting a given number of single consecutive laminations;

-aligning the selected laminations, already gathered into stack formation, and clamping them tight;

-binding together the entire stack of laminations

along one of its external or internal surfaces, by creating a permanent connection localized at the peripheral outer edges of the laminations.

Employing the method summarized above, the single punched laminations 8 are arranged one behind the next, in the same sequence and facing in the same direction as established by the punching operation. Accordingly, the laminations 8 are offered one to the next in such a way that the "microburrs" left by the punching stroke on one lamination will not be brought into contact with microburrs 9 left on the lamination next alongside.

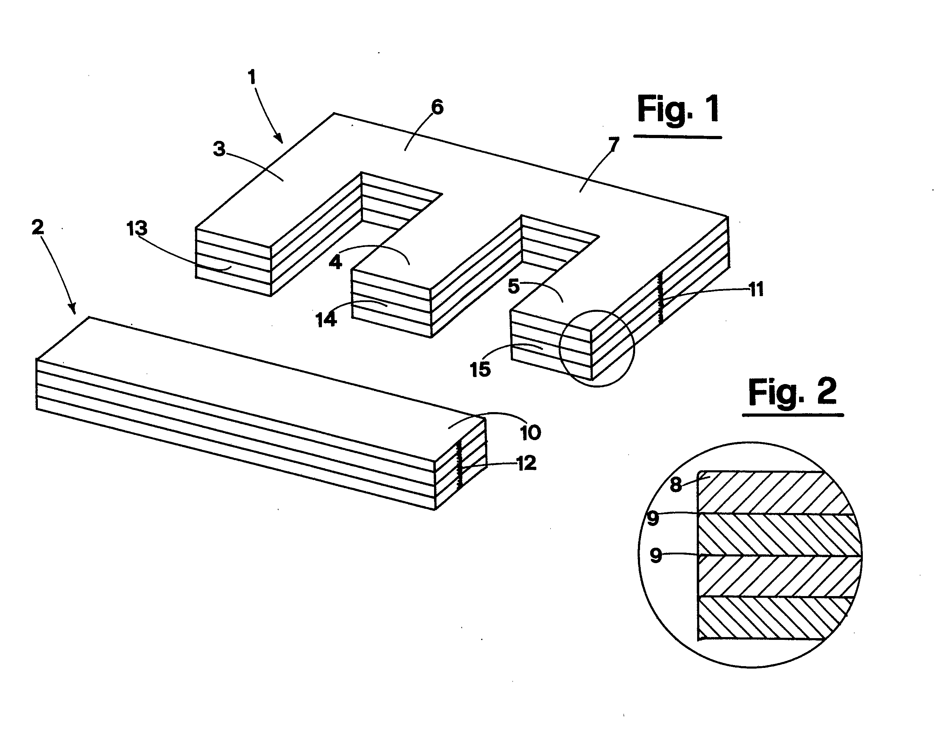

The single laminations thus match faultlessly one with the next when gathered into a stack, their punched edges fitting snugly together (see fig 2).

Proceeding in this fashion, the side faces of the two stacks 1 and 2, i.e. those formed by the severed edges of the single laminations, will be perfectly flat. Such a condition makes it possible to obtain a similarly faultless match between the butt ends 13, 14 and 15 of the coil-carrying members 3, 4 and 5 and the side face 10 of the stack denoted 2.

The two stacks 1 and 2 will be welded together once the coils have been wound onto the members 3, 4 and 5, or even onto one member only.

With the laminations punched and stacked facing in the same direction, the next step according to the invention is that of selecting (counting off and separating) a given number of the single laminations and aligning them to form one core component, then creating a permanent connection along at least one external surface of the stack; such a connection is embodied to advantage as a thin weldment 11 and 12. The connection might be obtained using different means, for example adhesives etc.; at all events, these serve to bind the laminations 8 of each stack together without having to provide special means of alignment such as pins or the like.

Arranging the laminations such that all face in the same direction permits of obtaining their alignment and formation into a stack using the cut edges as a reference: what is more, the punch microburrs have no adverse effect whatever on the operation.

The method disclosed provides notable economies, especially in large-scale production; formation of the stacks of laminations can be effected in-line, automatically, thereby dispensing with all the intermediate manipulation that characterizes prior art methods.

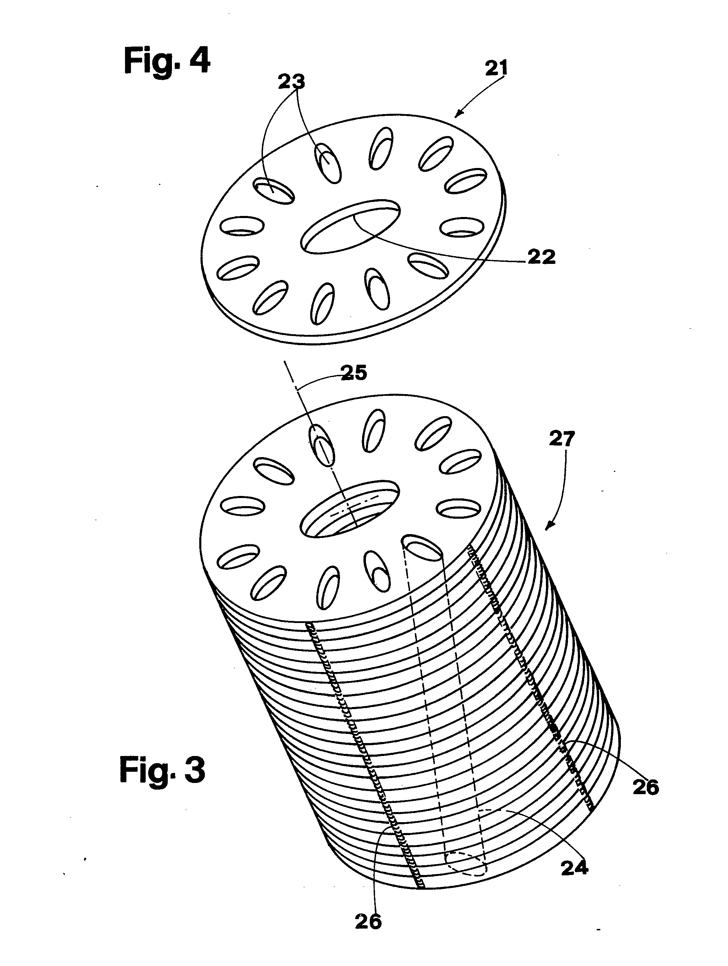

The method will now be described with reference to figs 3 and 4 of the drawings, which illustrate the embodiment of cage rotors in electric motors of the type having a cage pressure diecast directly into the rotor core laminations.

21 denotes a core lamination, provided with a centre hole 22, and a set of slots 23 evenly spaced apart around a circumference of given diameter and located near to the periphery. According to the invention, the laminations 21 are arranged to form a core 27, aligned in such a way that the slots 23 in each one combine to create channels 24 for accommodation of the conductors of the rotor cage, which lie at a given angle in relation to the axis 25 of the core thus assembled.

Once aligned, the laminations 21 are made fast one to the next along the cylindrical external surface of the core 27, effecting a permanent connection that is localized at the outer peripheral edges of the single laminations. Such a permanent connection might consist in one or more longitudinal weldments denoted 26.

Thus, the core 27 is formed into a rigid block and a cast can be effected, by injecting molten conductive metal into the channels 24 in the assembled stack of laminations, to the end of embodying the rotor cage. Once the casting has solidified completely, the thin weldment 26 can be removed by turning off material from the outer cylindrical surface of the assembled core 27, given that the laminations are now held in position by the conductive metal cage (aluminium in most instances).

The weldment 26 illustrated might be dispensed with in favour of a permanent connection obtained by the use of adhesives, for example; at all events, such adhesives would be applied similarly to localized areas of the peripheral edges of the laminations 21, once assembled to form a core 27.

Claims

1) Method of preparing stacks of laminations serving in particular for the embodiment of transformer cores, characterized in that it comprises the steps of:
-punching the core laminations;
-gathering up the laminations one behind the next, facing in the same direction and in the sequence established during punching;
-selecting a given number of single consecutive laminations; ·
-aligning the selected laminations, already gathered into stack formation;
-binding together the entire stack of laminations along one of its external or internal surfaces, by creating a permanent connection localized at the peripheral outer edges of the laminations.

2) Method as in claim 1, wherein a permanent connection binding the laminations together along the external or the internal surface of the core is obtained by means of welding.

3) Method as in claim 1, wherein a permanent connection binding the laminations together along the external or the internal surface of the core is obtained by means of adhesives.

4)      Method as in claim 1,
        characterized in that it comprises the steps of:
        -stacking together a plurality of core laminations,
        each one of which is provided with at least one set
        of slots evenly spaced apart around a circumference
        of given diameter;
        -aligning the core in such a way that the slots of
        the laminations create channels for accommodation of
        the conductors of the rotor cage, which are disposed
        in a helical pattern and lie at a given angle in
        relation to the core axis;
        -binding together the entire stack of laminations
        along the external cylindrical surface of the core
        by way of a permanent connection localized at the
        outer peripheral edges of the laminations;
        -casting the rotor cage by pressurized injection of
        a molten conductive metal into the assembled core
        laminations, whereupon the permanent connection
        binding the laminations together may be removed,
        once the casting has finally solidified, by turning
        off material from the cylindrical outer surface of
        the core.

5)      Method as in claim 4, wherein a permanent connection
        binding the laminations together along the external
        cylindrical surface of the core is obtained by means
        of welding.

6)      Method as in claim 4, wherein a permanent connection
        binding the laminations together along the external cylindrical surface of the core is obtained by means of adhesives.

**Fig. 1**

**Fig. 2**

1 · 6 · 3 · 7 · 2 · 13 · 4 · 14 · 5 · 15 · 11 · 10 · 12 · 8 · 9 · 9

0250371

**Fig. 4**

23    21

22

25

27

**Fig. 3**

26

26    24

# EUROPEAN SEARCH REPORT

European Patent Office

Application number

EP 87 83 0158

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 155 (E-256)[1592], 19th July 1984; & JP-A-59 56 853 (TOSHIBA K.K.) 02-04-1984 * Whole abstract * | 1 | H 01 F 41/02 H 02 K 15/00 |
| Y | Idem | 4 | |
| X | GB-A-1 326 766 (GENERAL ELECTRIC) * Page 3, lines 18-95 * | 1 | |
| A | | 3 | |
| Y | US-A-3 570 117 (VICTOR COMPANY OF JAPAN) * Column 3, line 62 - column 4, line 19 * | 4 | TECHNICAL FIELDS SEARCHED (Int. Cl.4) |
| A | | 5 | H 01 F 41/00 H 02 K 15/00 |
| A | PATENT ABSTRACTS OF JAPAN, vol. 7, no. 208 (E-198)[1353], 14th September 1983; & JP-A-58 105 533 (MATSUSHITA DENKI SANGYO K.K.) 23-06-1983 * Whole abstract * | 2 | |

-/-

The present search report has been drawn up for all claims

| Place of search | Date of completion of the search | Examiner |
|---|---|---|
| THE HAGUE | 21-09-1987 | VANHULLE R. |

# EUROPEAN SEARCH REPORT

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | US-A-3 550 266  (LINTON AND HIRST LTD)<br><br>--- | | |
| A | PATENT ABSTRACTS OF JAPAN, vol. 9, no. 280 (E-356)[2003], 8th November 1985; & JP-A-60 121 946 (TOSHIBA K.K.) 29-06-1985<br><br>----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 21-09-1987 | VANHULLE R. |